# EUROPÄISCHE PATENTANMELDUNG

(11) **EP 2 979 809 A1**
(43) Veröffentlichungstag der Anmeldung: **03.02.2016**
(21) Anmeldenummer: 15176019.6
(22) Anmeldetag: 09.07.2015
(51) Int. Cl.: B23P 15/00, B23C 3/18, B23Q 39/02

(54) **VERFAHREN UND VORRICHTUNG ZUR BEARBEITUNG EINES ROHLINGS**

(30) Priorität: 30.07.2014 AT 6022014
(71) Anmelder: Andritz AG, 8045 Graz (AT)
(72) Erfinder: Krasser, Josef, 8103 Rein (AT); Maier, Dipl.Ing., Markus, 8301 Laßnitzhöhe (AT); Preitler-Höller, Ing., Martin, 8113 St.Oswald bei Plankenwarth (AT); Klambauer, Adolf, 8045 Graz (AT); Zach, Maximilian, 8046 Graz-Stattegg (AT)
(74) Vertreter: Schweinzer, Friedrich

(57) **Zusammenfassung**

Die Erfindung betrifft ein Verfahren zur Bearbeitung eines Rohlings in einer Bearbeitungsmaschine, insbesondere Fräsmaschine. Es ist vornehmlich dadurch gekennzeichnet, dass mindestens zwei Bearbeitungseinheiten (1, 2, 3, 4) vorgesehen sind, die ein nicht symmetrisches Werkstück (5) mit dreidimensionaler Form herstellen und versetzt-synchron bearbeiten, insbesondere fräsen, wobei die Bearbeitungseinheiten (1, 2, 3, 4) gemeinsam gesteuert werden und während der Bearbeitung uneingeschränkt in alle Raumrichtungen bewegen bzw. fahren. Die Erfindung betrifft auch eine Bearbeitungsmaschine zur Durchführung des Verfahrens. Dadurch können die Bearbeitungszeiten stark reduziert werden.

## Beschreibung

Die Erfindung betrifft ein Verfahren zur Bearbeitung eines Rohlings in einer Bearbeitungsmaschine, insbesondere Fräsmaschine, sowie eine Bearbeitungsmaschine zur Durchführung des Verfahrens.

Bei der Bearbeitung von Rohlingen müssen oft große Volumen zerspant werden. Dies trifft insbesondere bei der Fertigung von Peltonlaufrädern aus Schmiederohlingen zu. Aber auch andere Bauteile wie beispielsweise Turbinenlaufräder, Pumpenlaufräder oder Zahnräder können aus einem Schmiederohling durch Zerspanen hergestellt werden. Die Bauteile können ein Rohteilgewicht von bis zu 50 to haben, wovon bis zu Zweidrittel als Späne anfallen. Derartige Werkstücke werden heute mit großen Fräsmaschinen hergestellt, wobei sie auf einem Bearbeitungstisch aufgespannt sind. Während der Bearbeitung bewegt sich die Bearbeitungsmaschine, beispielsweise Fräsmaschine in zwei Richtungen, d.h. im Wesentlichen horizontal und vertikal am Werkstück, während der sich Tisch radial dreht. Nach Fertigstellung der Bearbeitung an einem Peltonbecher wird das Werkstück um einen Winkel gedreht, so dass die Bearbeitung am nächsten Peltonbecher gestartet werden kann. Bis das Werkstück fertig gestellt ist dauert dies oft mehrere Wochen. Bei der Bearbeitung muss eine komplexe, dreidimensionale Freiformbauteilgeometrie, wie dies z.B. ein Peltonbecher ist, aus dem vollen Material herausgearbeitet werden. Zur Reduktion der Bearbeitungszeit und Durchlaufzeit könnte man in einfacher Weise zwei oder mehrere Bearbeitungseinheiten gleichzeitig einsetzen. Dies führt aber nicht zum Erfolg, da die meisten Werkstücke unsymmetrisch sind, d.h. eine ungerade Zahl von Peltonbechern, eine ungerade Zahl von Zähnen am Zahnrad, eine ungerade Zahl von Laufschaufeln bei einem Francisturbinenrad etc. aufweisen. Hier sind bei gegenüberliegend angeordneten Werkzeugen von beispielsweise zwei Bearbeitungseinheiten, die Werkzeuge immer an unterschiedlichen Positionen der Bauteiloberfläche, z.B. der Peltonbecher positioniert, wodurch eine Bewegung des Werkstücks nicht möglich ist.

Ziel der Erfindung ist es nun für eine Bearbeitung von Rohlingen mit einer großen Zerspanungsleistung die Bearbeitungszeit und Durchlaufzeit des Werkstücks stark zu reduzieren, bei gleichzeitiger Erhaltung der Oberflächenqualität.

Die Erfindung ist daher dadurch gekennzeichnet, dass mindestens zwei Bearbeitungseinheiten vorgesehen sind, die ein nicht symmetrisches Werkstück mit dreidimensionaler Form herstellen und versetzt-synchron bearbeiten, insbesondere fräsen, wobei die Bearbeitungseinheiten gemeinsam gesteuert werden und während der Bearbeitung uneingeschränkt in alle Raumrichtungen bewegen bzw. fahren, wobei auch vier Bearbeitungseinheiten versetzt-synchron ein Werkstück bearbeiten können. Durch die gemeinsame Steuerung ist immer die jeweilige Position von Werkstück und Werkzeugen bekannt und die Werkzeuge können nach den konstruktiven Vorgaben optimal gesteuert werden, wobei die Positionen der Werkzeuge am jeweiligen Bauteil an unterschiedlicher Stelle sind und mit dem Werkzeug jede Position am Rohling/Werkstück erreicht werden kann.

Eine vorteilhafte Weiterbildung der Erfindung ist dadurch gekennzeichnet, dass die Bearbeitungseinheiten in einem Winkel β zueinander abhängig vom jeweils zu fertigenden Werkstück angeordnet sind. Damit können in günstiger Weise unsymmetrische Werkstücke gefertigt werden.

Eine günstige Ausgestaltung der Erfindung ist dadurch gekennzeichnet, dass das Werkstück stationär angeordnet ist und gegebenenfalls um eine Achse schrittweise weiterbewegt wird. Durch die stationäre Anordnung ist die Position des Werkstückes während der Bearbeitung fixiert, wobei das Werkstück für einen nächsten Bearbeitungsschritt, d.h. Bearbeitung einer neuen (Peltonbecher-) Oberfläche um einen Winkel weitergedreht wird.

Das Werkstück kann dabei ein Peltonlaufrad, ein Pumpenlaufrad oder beispielweise ein Zahnrad sein. Aber auch andere komplexe dreidimensionale Oberflächen wie z.B. (Kaplan-) Turbinenschaufeln können so in kürzester Zeit bearbeitet werden, da immer die genaue Position der Werkzeuge im Verhältnis zum Werkstück bekannt ist. Die Kaplanschaufeln können dabei um eine horizontale Achse drehbar eingespannt sein und von beiden Seiten auf der Oberfläche gleichzeitig bearbeitet werden.

Die Erfindung wird nun anhand der Zeichnungen beispielhaft beschreiben, wobei
Fig. 1 eine Variante der Erfindung mit zwei Bearbeitungseinheiten,
Fig. 2 eine Variante der Erfindung mit vier Bearbeitungseinheiten,
Fig. 3 eine Draufsicht auf einen Bearbeitungsschritt,
Fig. 4 eine Seitenansicht des Bearbeitungsschrittes nach Fig. 3,
Fig. 5 eine Draufsicht auf einen weiteren Bearbeitungsschritt und
Fig. 6 eine Seitenansicht eines weiteren Bearbeitungsschrittes
darstellt.

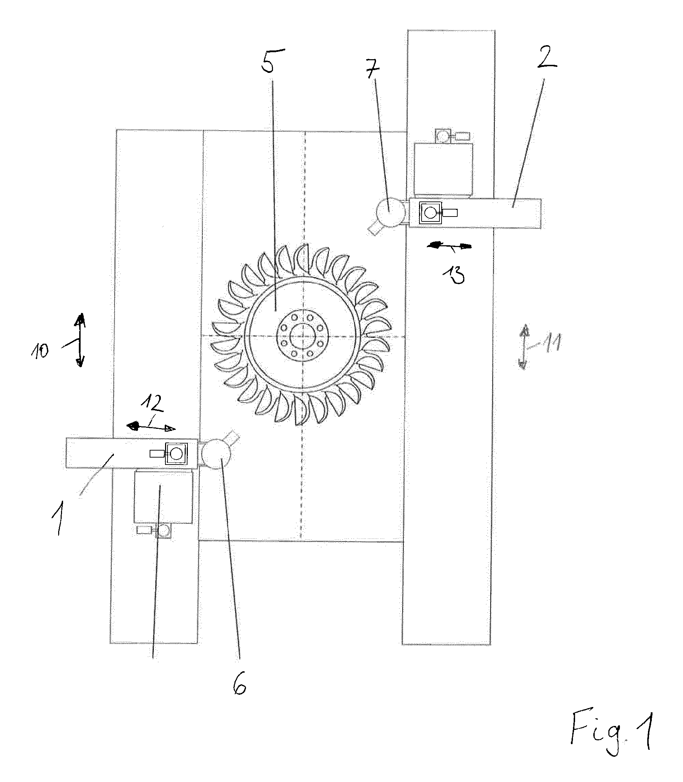

In Fig. 1 ist eine Variante einer erfindungsgemäßen Bearbeitungsmaschine mit zwei Bearbeitungseinheiten 1, 2 dargestellt. Hier sind diese Bearbeitungseinheiten beispielhaft als Fahrständermaschinen skizziert. Grundsätzlich können sie aber auch durch Industrieroboter mit Fräsbearbeitungseinheiten ersetzt werden. Dies ist im Wesentlichen abhängig von der Größe des Werkstücks und dem Material, wodurch sich auch die aufzubringenden Kräfte ergeben. Um die Genauigkeit zu erhalten und auch entsprechend hohe Schnittgeschwindigkeiten zu erzielen, sind bei großen Werkstücken Fahrständermaschinen vorzuziehen.

Beispielhaft für ein Werkstück 5 ist hier eine große Schmiedescheibe als Halbzeug für ein Peltonlaufrad dargestellt. Es könnte aber ebenso eine große Schmiedescheibe für ein großes Zahnrad oder ein großes Schmiedeteil für ein Francislaufrad sein. Der Werkzeugträger 6, 7 ist jeweils in tangentialer Richtung 10, 11 entlang des Werkstücks 5 sowie in dazu senkrechter Richtung 12, 13 in Richtung des Werkstückes 5 verfahrbar. Der Werkzeugträger 6, 7 ist aber ebenfalls in vertikaler Richtung (d.h. aus der Zeichnungsebene heraus) verfahrbar. Dadurch sind räumlich alle Freiheitsgrade gegeben und es kann praktisch jede Position des Werkzeugs eingestellt werden. Dies ist jedoch für jedes Werkzeug unterschiedlich.

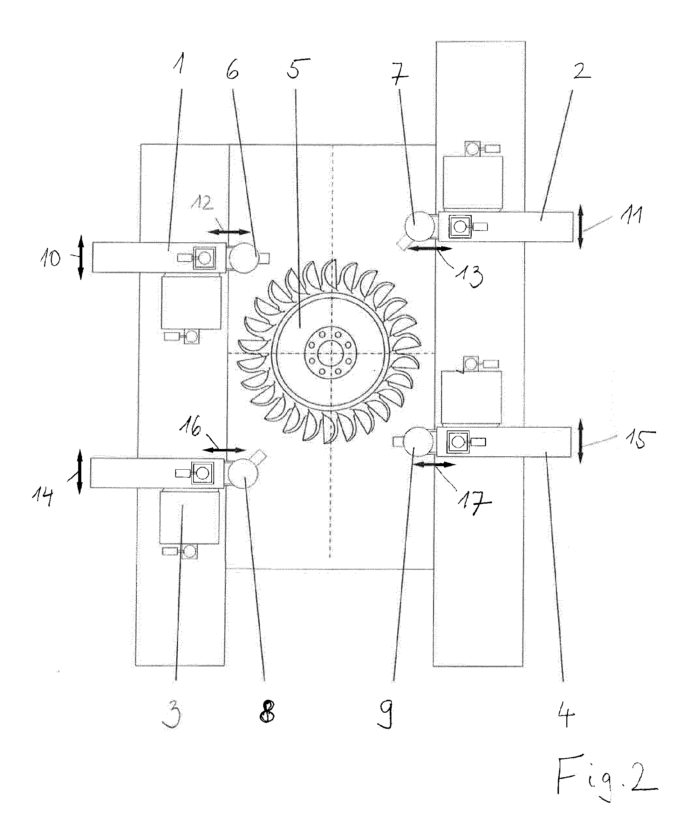

In Fig. 2 ist eine Anordnung von vier Bearbeitungseinheiten 1, 2, 3, 4 dargestellt. Jeder Bearbeitungseinheit ist ein eigener Werkzeugträger 6, 7, 8, 9 zugeordnet. Die Bewegung der einzelnen Bearbeitungseinheiten, die als Fahrständermaschinen dargestellt sind, kann in praktisch tangentialer Richtung 10, 11, 14, 15 und in Richtung 12, 13, 16, 17 in das Werkstück hinein erfolgen. Natürlich kann auch eine vertikale Bewegung aller Bearbeitungseinheiten und damit der entsprechenden Werkzeuge erfolgen, wobei alle Bewegungen voneinander unabhängig und uneingeschränkt ausgeführt werden können. Damit können alle gewünschten dreidimensionalen Geometrien herausgearbeitet und deren Oberflächen bearbeitet werden.

Die Bearbeitung eines Rohlings wird nun anhand eines Rohlings für ein Peltonlaufrad näher dargestellt. Dabei erfolgt in einem ersten Schritt ein Vordrehen des Halbzeugs für die äußere Form, sowie die Bearbeitung von diversen Bohrungen.

In einem weiteren Schritt wird ein Großteil des Materialvolumens abgetragen. Der Fräskopf hat dabei eine Winkelstellung von 90°. Bei diesem Bearbeitungsschritt erfolgt das Fräsen nur an der oberen Werkstückhälfte. Als nächster Schritt erfolgt ein Fräsen mit schräger Winkelkopfstellung, um die innere Becherkontur so tief wie möglich zu bearbeiten. Natürlich erfolgt auch dieser Schritt erst einmal für die obere Werkstückhälfte. Danach erfolgt ein Wenden des Werkstücks und eine Wiederholung des Fräsens mit Winkelkopfstellung 90° und in weiterer Folge mit schräger Winkelkopfstellung für die noch nicht bearbeitete Werkstückhälfte. Anschließend erfolgt die Fertigbearbeitung der Becherinnenseite, des Becherrückens und der Schneide.

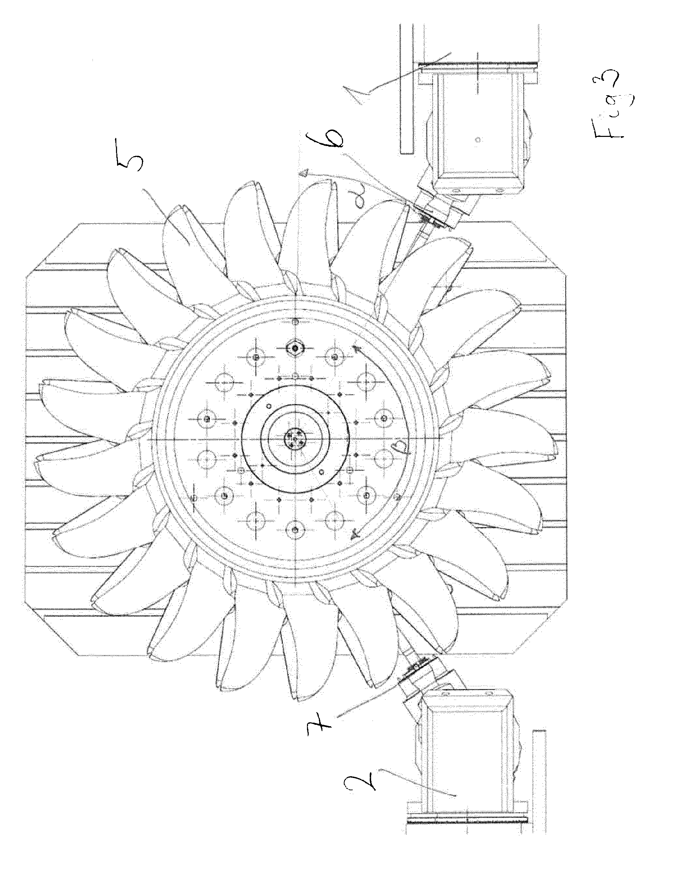

Fig. 3 zeigt eine Draufsicht bei einer horizontalen Bearbeitung. Dabei ist die Bearbeitungseinheit 1 mit dem Werkzeugträger (Fräskopf) 6 die Hauptmaschine, mit der erst alle Bearbeitungsprogramme getestet werden. Der Verdrehwinkel α des Winkelkopfs (Fräskopf) 6 der Bearbeitungseinheit 1 ist im Wesentlichen abhängig vom Durchmesser des Werkstücks 5 und der Werkzeugzugänglichkeit der Bauteilgeometrie. Der Winkel β zwischen Winkelkopf (Fräskopf) 6 der Bearbeitungseinheit 1 und dem Winkelkopf (Fräskopf) 7 der Bearbeitungseinheit 2 ergibt sich aus der Gesamtanzahl der zu fertigenden Peltonbecher und der Anzahl einer ungeraden Becherverdrehung. Dadurch ergibt sich, dass die Bearbeitungseinheit 1 immer die geraden Becherteilungen und die Bearbeitungseinheit 2 immer die ungeraden Becherteilungen bearbeitet. Mit dieser Aufteilung wird gewährleistet, dass die beiden Bearbeitungseinheiten nie ein und dieselbe Becherteilung bearbeiten. Haben die beiden Bearbeitungseinheiten 1, 2 die Bearbeitung an einem derartigen Becherpaar abgeschlossen und stehen die Winkelköpfe 6, 7 in einer definierten und mit dem Werkstück kollisionsfreien Position, wird der Arbeitstisch um zwei Becherwinkelteilungen weitergedreht. So werden der Reihe nach alle Becher bearbeitet. Die Bearbeitung durch die beiden Winkelköpfe 6, 7 erfolgt dabei versetzt-synchron, das heißt, beide Werkzeuge arbeiten mit dem gleichen NC-Programm synchron, der Bearbeitungsstart der Werkzeugköpfe erfolgt jedoch zeitlich versetzt.

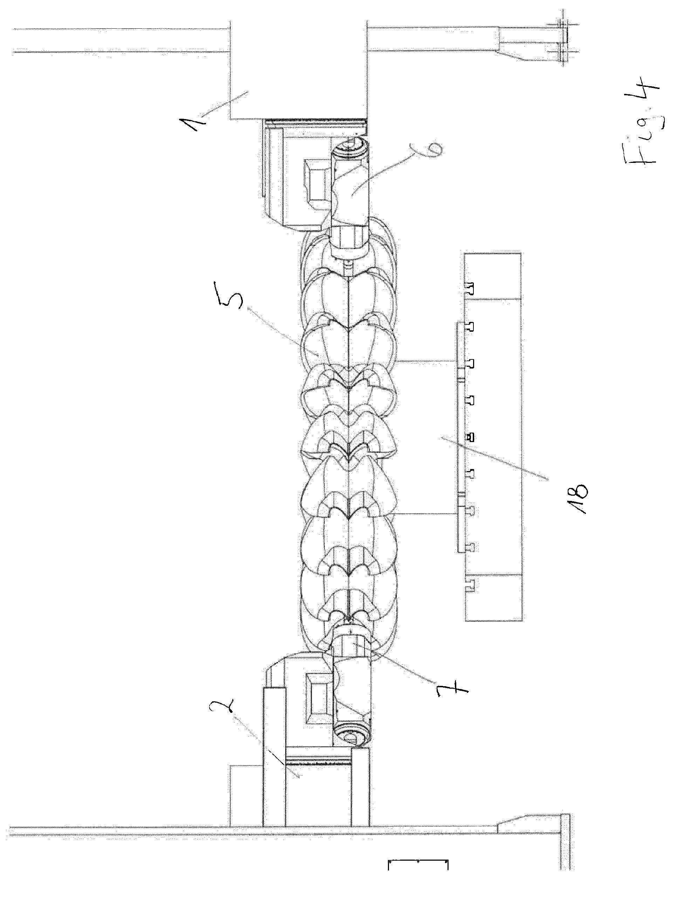

In Fig. 4 ist eine Seitenansicht des Bearbeitungsschritts nach Fig. 3. Neben den Bearbeitungseinheiten 1, 2 und den Winkelköpfen (Fräsköpfen) 6, 7 erkennt man hier auch den Arbeitstisch 18, der als Rundtisch ausgeführt ist und auf dem das Werkstück 5 eingespannt ist.

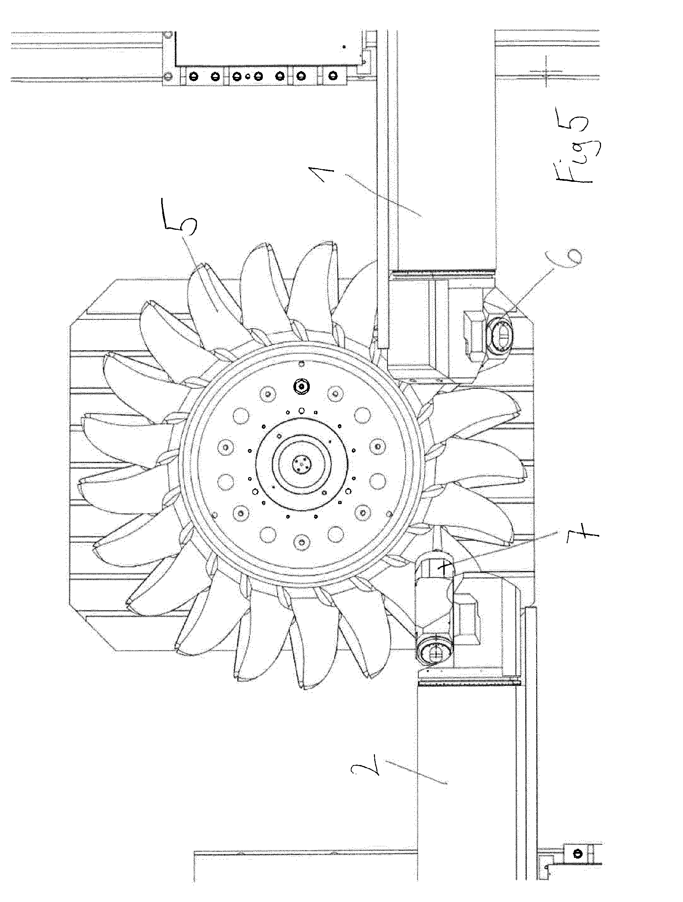

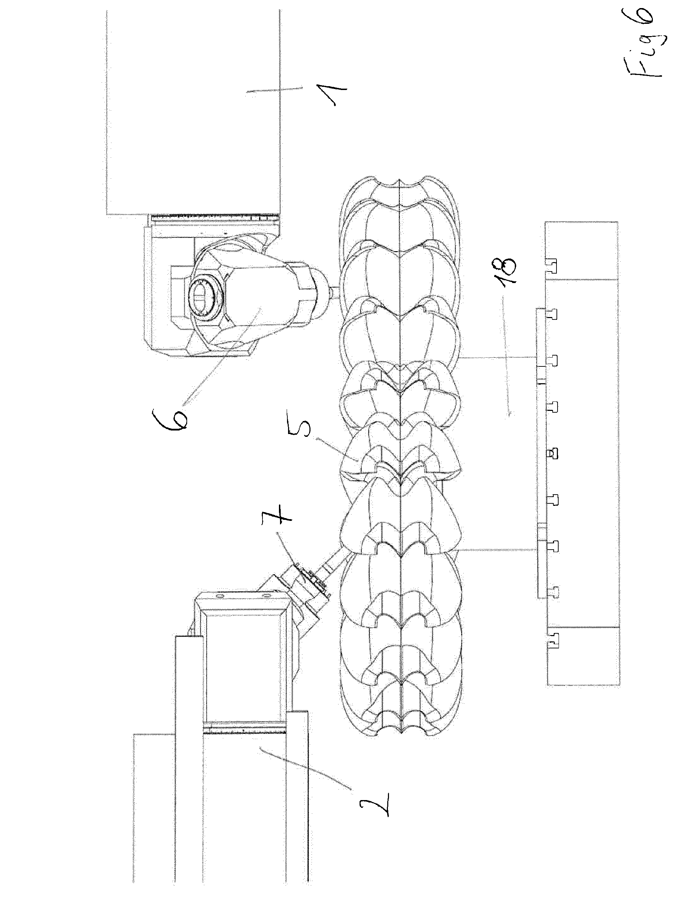

Fig. 5 und 6 zeigen einen nachfolgenden Bearbeitungsschritt mit vertikaler Bearbeitung. Die Bearbeitungseinheiten 1, 2 mit den entsprechenden Winkelköpfen (Fräsköpfen) 6, 7 werden hier in der Höhe so positioniert, dass die Winkelköpfe (Fräsköpfe) 6, 7 die vollständige Tiefe der Peltonbecher erreichen können. Auf diese Weise erfolgt die genaue Fertigbearbeitung der Becherinnenseite, des Becherrückens und der Schneide.

Bei anderen Bauteilen, wie z.B. Zahnrädern ist ein Wenden der Schmiedescheibe nicht erforderlich.

## Patentansprüche

1. Verfahren zur Bearbeitung eines Rohlings in einer Bearbeitungsmaschine, insbesondere Fräsmaschine, **dadurch gekennzeichnet, dass** mindestens zwei Bearbeitungseinheiten (1, 2, 3, 4) vorgesehen sind, die ein nicht symmetrisches Werkstück (5) mit dreidimensionaler Form herstellen und versetzt-synchron bearbeiten, insbesondere fräsen, wobei die Bearbeitungseinheiten (1, 2, 3, 4) gemeinsam gesteuert werden und während der Bearbeitung uneingeschränkt in alle Raumrichtungen bewegen bzw. fahren.

2. Verfahren nach Anspruch 1, **dadurch gekennzeichnet, dass** vier Bearbeitungseinheiten (1, 2, 3, 4) versetzt-synchron ein Werkstück (5) bearbeiten.

3. Verfahren nach Anspruch 1 oder 2, **dadurch gekennzeichnet, dass** die Bearbeitungseinheiten (1, 2, 3, 4) in einem Winkel β zueinander abhängig vom jeweils zu fertigenden Werkstück angeordnet sind.

4. Verfahren nach einem der Ansprüche 1 bis 3, **dadurch gekennzeichnet, dass** das Werkstück (5) stationär angeordnet ist und gegebenenfalls um eine Achse schrittweise weiterbewegt wird.

5. Verfahren nach einem der Ansprüche 1 bis 4, **dadurch gekennzeichnet, dass** das Werkstück (5) ein Peltonlaufrad, ein Pumpenlaufrad oder ein Zahnrad ist.

6. Verfahren nach einem der Ansprüche 4 oder 5, **dadurch gekennzeichnet, dass** das Werkstück (5) um eine doppelte Winkelteilung beispielsweise der Peltonbecher, der Laufradflügel oder der Zähne weiterbewegt wird.

7. Bearbeitungsmaschine, insbesondere Fräsmaschine, zur Bearbeitung eines Rohlings, **dadurch gekennzeichnet, dass** mindestens zwei Bearbeitungseinheiten (1, 2, 3, 4) vorgesehen sind, die ein nicht symmetrisches Werkstück (5) mit dreidimensionaler Form herstellen und synchron bearbeiten, insbesondere fräsen, wobei die Bearbeitungseinheiten (1, 2, 3, 4) mit einer gemeinsamen Steuereinheit verbunden sind und uneingeschränkt in alle Raumrichtungen bewegbar bzw. fahrbar ausgeführt sind.

8. Bearbeitungsmaschine nach Anspruch 7, **dadurch gekennzeichnet, dass** vier Bearbeitungseinheiten (1, 2, 3, 4) vorgesehen sind.

9. Bearbeitungsmaschine nach Anspruch 7 oder 8, **dadurch gekennzeichnet, dass** die Bearbeitungseinheiten (1, 2, 3, 4) in einem Winkel β zueinander abhängig vom zu fertigenden Werkstück angeordnet sind.

10. Bearbeitungsmaschine nach einem der Ansprüche 7 bis 9, **dadurch gekennzeichnet, dass** das Werkstück (5) stationär auf einem Arbeitstisch (18) angeordnet ist und der Arbeitstisch (18) gegebenenfalls um eine Achse schrittweise weiterbewegbar ist.
